# EUROPEAN PATENT APPLICATION

(11) **EP 2 908 263 A1**
(43) Date of publication of application: **19.08.2015**
(21) Application number: 15154749.4
(22) Date of filing: 11.02.2015
(51) Int. Cl.: G06K 7/00, G07C 9/00

(54) **Locking apparatus**

(30) Priority: 11.02.2014 GB 201402314
(71) Applicant: Camlock Systems Ltd, Eastbourne, Sussex BN23 6QE (GB)
(72) Inventor: Simmonds, Zachary Michael, Eastbourne, East Sussex BN20 8UX (GB)
(74) Representative: Marchant, Michael John

(57) **Abstract**

The present invention concerns a locking apparatus activated by an RFID system. In particular, it concerns a locking apparatus containing an RFID system for motorised unlocking, the apparatus also having a manual key override.

## Description

The present invention concerns a locking apparatus activated by an RFID system. In particular, it concerns a locking apparatus containing an RFID system for motorised unlocking, the apparatus also having a manual key override.

RFID (radio-frequency identification) systems are well known and extensively used for all manner of applications. RFID works on the principle of a wireless and noncontact use of radio-frequency electromagnetic fields to transfer data from a tag (which can be passive or active, requiring battery power to operate) to a reader (which again can be passive or active). The activation of the reader by the tag can then be used to activate further processes.

A disadvantage of RFID systems is that the signal will not pass through metal. Even the presence of small metal objects and thin sheeting disrupts the signal and can create serious user problems, sometimes to the extent that the metal will prevent the RFID system from working at all.

Locks operated by RFID systems are known. These are commonly found on e.g. doors of hotel rooms. Moreover, with the increase in IT security and sensitivity experienced over the past number of years, and becoming ever more important, server racks are also more often being designed to incorporate handle locking systems that use RFID to allow user access. A server rack is a rack that holds one or more computer servers or other IT infrastructure, and is often secured by a lockable handle that is positioned in the frame (typically made of metal) of the rack. The handle is able to be locked in a closed position, preventing access to the inside of the server rack where the equipment is situated.

These RFID server rack locking systems, however, tend to do away with the combined use of a manual key override within the server rack handle, instead relying solely on the RFID system to operate the locking mechanism.

The present invention looks to address some of the problems with existing RFID locking systems, in order to be able to successfully utilise an RFID system particularly in combination with a manual key override. Moreover, the present system, when in the embodiment of a server rack handle, is so proportioned that it can easily be retrofitted in place of existing server rack handles, thereby affording a quick and effective installation route for existing systems.

In more detail, in one embodiment of the present invention there is provided a two part RFID locking system, the first part comprising a handle unit comprising a receiver positioned at a receiving location, the second part comprising a secondary unit positioned at a locking location, wherein the secondary unit is separable from the handle unit and in use said units are operably associated with one another, the receiver being connectable to the secondary unit via one or more cables, wherein the cables are not connected when the handle unit and secondary unit are not operably associated with one another, connection of the one or more cables between the receiver and the secondary unit occurring at one or more contact points when the handle unit and secondary unit are operably associated, where a circuit is made between the receiver and the secondary unit or one or more components of said unit in order to allow activation of the secondary unit or said one or more components.

The receiving location is a location on the handle unit where disruption to the RF signal caused by any metallic elements present in, around, or associated with the handle unit is minimised or absent. Such metallic elements can include e.g. metal sheeting of the panel to which the handle unit is attached, and also a manual override locking barrel that is associated with the handle.

By 'operably associated' it is meant that a working circuit is completed between the receiver and the secondary unit, or electronic components of the secondary unit (such as a processing unit and/or a motor), such that activation of the receiver by an RFID tag leads to the desired action being taken in the secondary unit (such as operation of a motor to withdraw a locking bar).

Preferably the secondary unit is an electronic drive unit. Such electronic drive unit will typically comprise a motor which is able to drive a locking bar between a locking position and an unlocking position. The electronic drive unit, and/or various components within the unit (such as the motor), is typically connected to a power source. This could be a battery (e.g. 12V, 24V, etc.), or could be via a mains supply.

In certain aspects, when the handle unit and secondary unit are operably associated with one another, the handle unit and secondary unit are nevertheless separated to an extent by an intermediate structure, such as a panel. In certain embodiments, the panel is metal. The panel can be that of a door, window, or any structure that may have a handle associated with it to allow its opening/closing. In the same or alternative embodiments, the panel is that of a door of a server rack. In such embodiments, the locking assembly comprises a server rack handle assembly.

The present invention is particularly useful where there is a source of metal in proximity to the RFID receiver which would ordinarily act to disrupt the RF signal. In this regard, the present invention allows for placement of the RFID receiver a suitable distance from the source of the metal such that it is able to function satisfactorily, whilst still being able to activate a secondary unit at a different location, even where the different location is separated from the receiver via a metallic material. The present invention allows the connection between the receiver and the secondary unit to be achieved in a safe and neat way, such that there is reduced capacity for disruption to the system in light of technical malfunction such as accidental severing of the cable(s) connecting the receiver and secondary unit.

Preferred embodiments of the present invention will now be described, with reference to the figures. In this regard:
Figure 1 is an exploded view of one embodiment of the present invention, showing a handle unit and a secondary unit separated by a sheet of a panel.
Figure 2 depicts an embodiment of a handle unit of the present invention.
Figure 3 depicts an embodiment of a handle of the present invention.
Figure 4 depicts an embodiment of a secondary unit of the present invention.
Figure 5 depicts an embodiment of the present invention, wherein the handle unit and secondary unit are operably associated with one another.

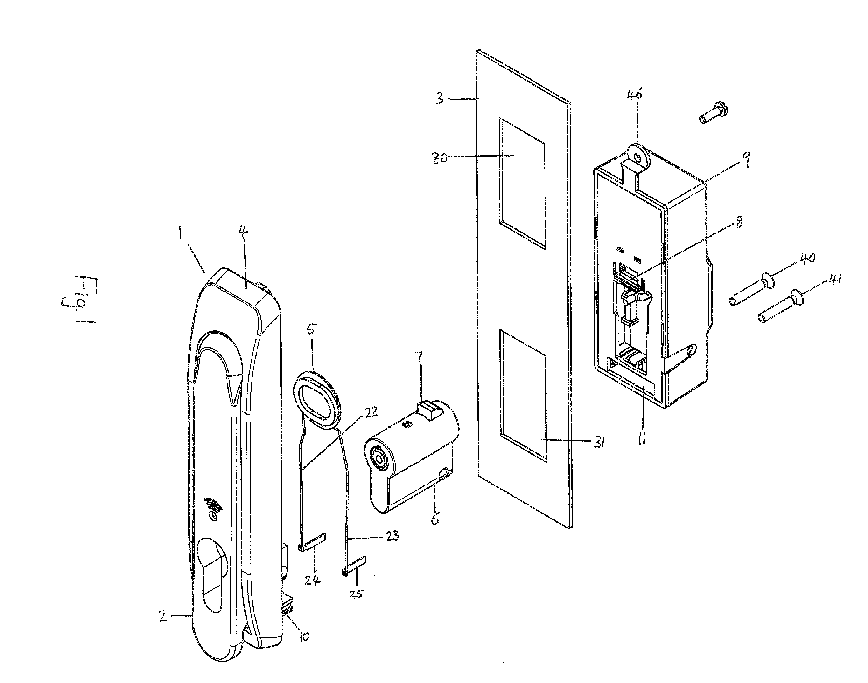

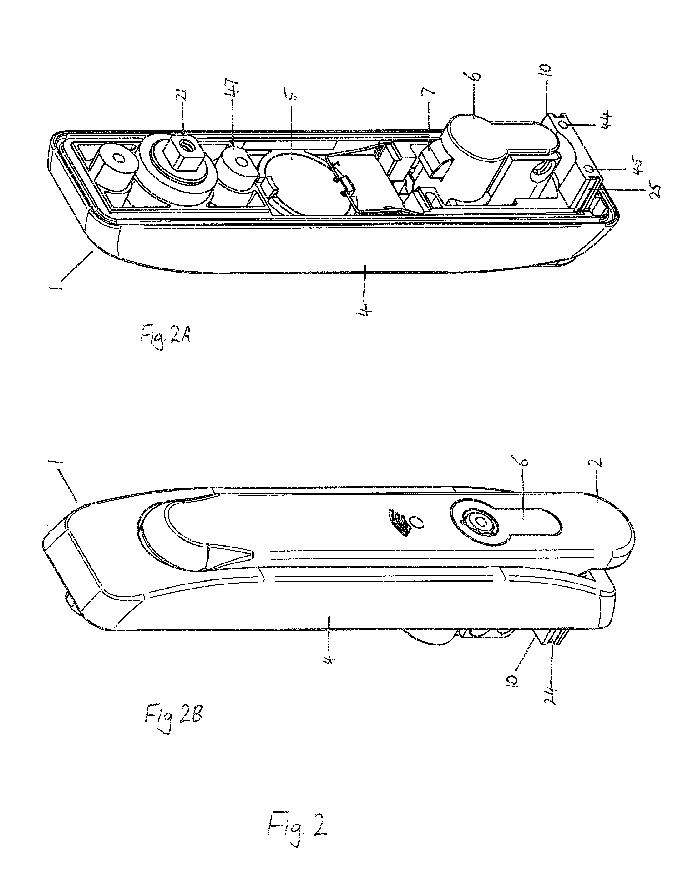

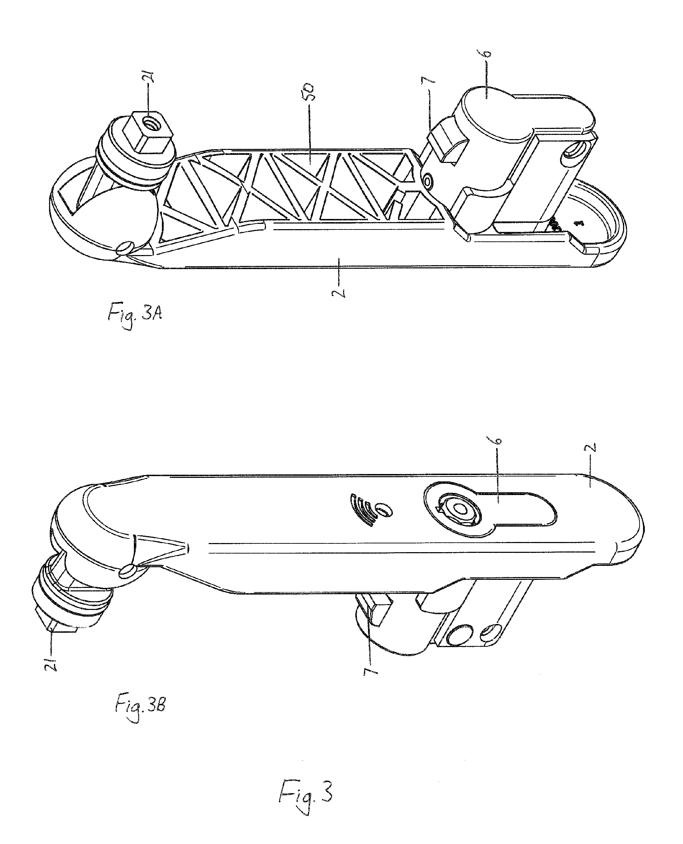

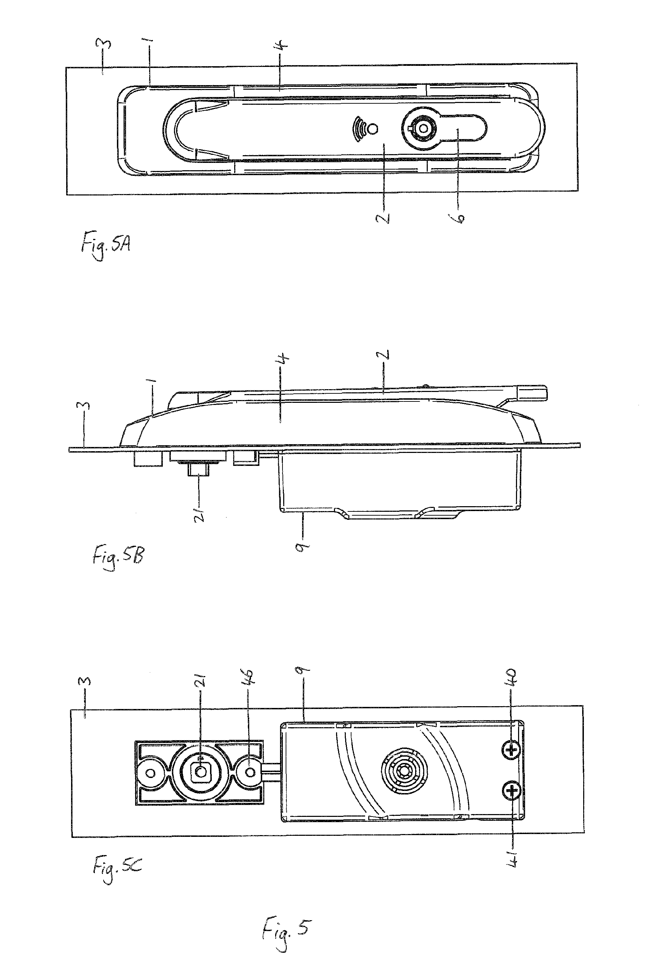

In more detail, and as shown in Figures 1, 2, 3, and 5 the locking apparatus of the present invention comprises a handle unit (1), which itself comprises a handle (2) rotatable around an axis and wherein the handle is associated with a latch [not shown] (typically via a shaft (21)). The handle (2) can be associated with said latch via an intermediate structure, such as a spacer unit and/or gearing mechanism [not shown], which can be separable from the handle unit in order to allow easier fitting of the assembly. The handle unit (1) is associated with an object that is able to be opened and closed, such as a panel (3) (e.g. door, window, etc.). Rotation of the handle (1) enables the latch to be moved from a closed position (where the latch prevents the panel from opening) to an open position (where the latch is unobstructed and therefore allows the panel to be opened), and vice versa. In certain embodiments, the handle is an elongate structure, where the rotation axis is positioned towards a proximal end (arbitrarily designated for the purposes of this description).

The handle unit further comprises a handle frame (4) into which the handle (2) may fit in order to achieve a secure locking of the handle into place. The handle frame (4) has incorporated upon or within it an RFID receiver (5), which can be activated by an RFID tag [not shown]. The RFID tag is typically carried by the end user, and is swiped over the receiving location in order to generate an activation signal. This receiver (5) is positioned such that interference from any metal in its vicinity is reduced to an extent that allows the RFID system to function suitably.

In alternative embodiments [not shown], the RFID receiver may be positioned in the handle (2) of the handle unit (1). The principle of the present invention will apply equally to such configurations, such that the cables of the receiver will still need to be positioned appropriately along the handle and/or handle frame such that they ultimately reach end contacts, which are then contactable with the secondary unit. The skilled person will be aware of various configurations that can achieve this. One example is that the cable(s) from the receiver when positioned in the handle could run up the handle to the rotation point of the handle, and thereafter run via the frame to the contacts. The cables at the rotation point of the handle can either be run continuously to the contacts, or else may terminate on the handle and be connectable to the contacts via some intermediate contact connecting the handle cable(s) to the frame cable(s).

The handle has associated with it a locking barrel (6) which is positioned towards the distal end of the handle (i.e. at the opposite end to the rotation axis). The locking barrel (6) has a protruding portion (7) which interacts with a locking bar (8) positioned on a secondary unit (9) of the locking apparatus.

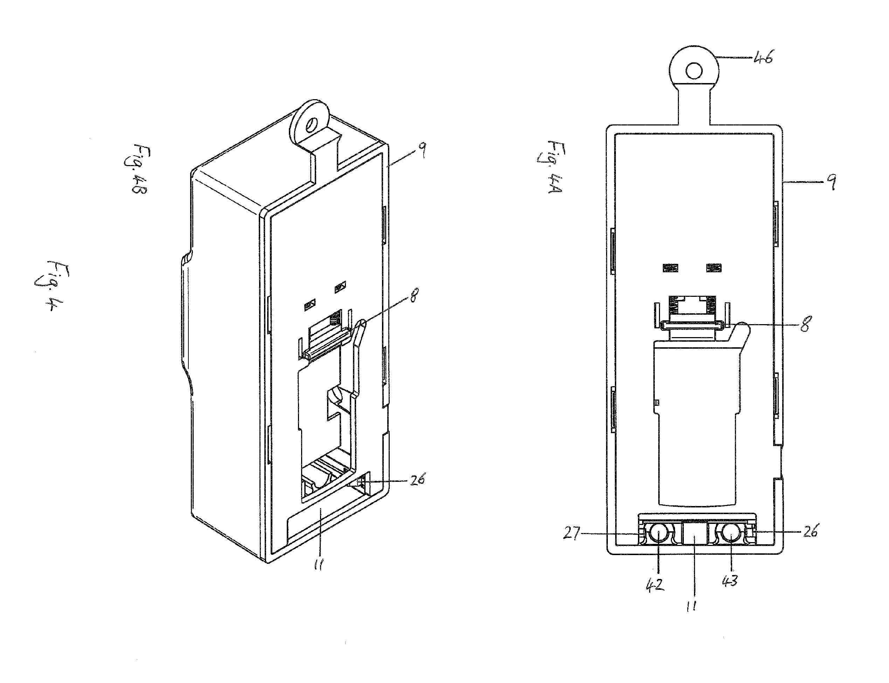

Thus, as shown in Figures 1, 4 and 5, the locking apparatus of the present invention also comprises a secondary unit (9). Preferably, a substantial portion of the secondary unit (9) when operably linked to the handle unit will be positioned on the other side of the panel (3) from that of the handle unit (1) (excepting various screw posts/clips which may extend from one side of the panel to the other from either the handle unit or the secondary unit in order to operably associate the two units together). This secondary unit (9) comprises a locking bar (8), which interacts with the protruding portion (7) of the locking barrel (6). When both the protruding portion (7) of the locking barrel and the locking bar (8) of the secondary unit are in an extended position, the barrel, and by association the handle, effectively is locked in place when the handle is in a closed position sitting within the handle frame.

When the handle (2) is in a closed position (e.g. nested within the frame of the handle unit), the locking barrel (6) extends through the panel (3) (e.g. door panel or whatever structure the handle is affixed to) and the protruding portion (7) interacts with a locking bar (8) of the secondary unit (9) positioned on the other side of the panel to complete the lock. Once the protrusion interacts with the locking bar, the handle is effectively fixed in position and cannot be lifted and/or rotated in order to move the latch away from e.g. the side wall of the unit in question, thus preventing opening of the door.

In preferred embodiments of the present invention, the locking barrel can be activated by a key and is accessible from the outside of the handle. In order to unlock the handle using the key locking barrel, a key is inserted into the locking barrel and thereafter rotated, which withdraws the protruding portion (7) of the lock. The locking barrel, and by association the handle, is therefore free to be moved away from the locking bar (8) and thus permits the handle to be lifted and rotated, thereby allowing opening of the panel.

In preferred embodiments of the present invention the secondary unit (9) is an electronic drive unit, where the drive unit comprises the locking bar (8) and a motor [not shown]. The motor is able to drive the locking bar (8) from an extended (locked) position to a withdrawn (unlocked) position. In such embodiments, the protrusion (7) on the locking barrel (6) typically stays in an extended position. In order to effect unlocking, the locking bar (8) itself is driven (e.g. via a motor) to an unlocked (withdrawn) position whereby clearance is provided for the protrusion (7) of the locking barrel to pass by unhindered. Once again, this allows the handle to be lifted and rotated in order to open the panel (e.g. door).

The handle unit (1) and secondary unit (9) will typically be provided as two separate parts, since this allows the assembly of the complete unit on respective sides of the target panel (3). The handle unit (1) and secondary unit (9) must be aligned correctly such that the locking barrel (6) associated with the handle (2) and the locking bar (8) of the secondary unit (9) can interact to accomplish the lock. Typically, the units are clipped or screwed together with the panel (3) separating a portion of the combined assembly. There will typically be one or more fixing posts (10) on the handle unit which may be fixed (e.g. via screws) to corresponding one or more portions (11) of the secondary unit (9) thereby holding the two units together to be operably associated.

In the present invention, it is a preferred embodiment that the motor of the secondary unit is activated by the RFID signal generated by activation of the RFID receiver via a tag.

In the same or alternative preferred embodiments, the receiving location where the RFID receiver (5) is located is on a part of the handle unit (1). Where there is a manual key override barrel (6) associated with the handle (1), it is preferred that the receiving location is far enough away from the barrel such that the barrel does not interfere significantly (i.e. to the detriment of the RFID system) with the working of the RFID system. Typically, the manual key override barrel (6) will be made from metal, or at least have a large metal component to it. The receiver (5) is preferably located on or within the handle frame (4), typically underneath a portion of the moveable handle (2). Alternatively, however, the receiver could be located on the handle itself, although this might require further modification of the design in order to suitably run the cables connecting the receiver (5) to the secondary unit (9) without interference by the rotation of the handle (2).

It will be evident to the skilled person that since the RFID signal is negatively affected by metal, the handle unit (i.e. the frame and/or the handle) will preferably be made substantially from non-metallic material. In alternative embodiments, the handle unit may have metallic elements or comprise one or more metallic portions, but such metallic portions will necessarily be in parts of the handle unit that are distant enough from the RFID receiver so as not to cause interference to the RF signal.

By the receiving unit (5) being separable from the secondary (e.g. electronic drive) unit (9), the retrofit of the locking assembly onto existing units is made much easier. In this regard, the panel (3) will typically incorporate one or more holes (30, 31) through which at least the locking barrel (6) associated with the handle (2) extends through in order to be able to interact with the locking bar (8) of the secondary unit (9) on the other side of the panel (3). As mentioned above, this prevents the handle (2) from being able to be lifted and rotated. The driving shaft (21) of the handle will also typically need to extend through the panel (3), either directly or indirectly (e.g. via a spacer and/or gear box), as this will be associated with a latch which abuts a portion of a side wall or the like in order to prevent the panel from opening. On rotation of the handle, the latch is moved out of the way and the panel is able to be opened.

In order for the locking system of the present invention to function satisfactorily, the RFID receiver (5) must be connected to the electronic drive unit (9). Whilst typical RFID systems will have the receiver placed directly on, or in the near vicinity of, the electronic drive unit, the presence of the metal key barrel (6) and also the use of metal typically for the panel (3) construction renders this configuration unusable since the RF electromagnetic fields are distorted by the metal to a detrimental extent. One option is to use a cable that connects the receiver unit directly to the electronic drive unit. The cable leads from the receiver in the handle unit, through the panel, and into secondary (drive) unit. A disadvantage of this is that there often is then a trailing cable which can be caught readily in the handle mechanism during operation. This presents a high risk of damage to the cable and also to the operation of the handle.

Thus, the present invention looks to address this problem by running one or more cables (22, 23) from the receiver (5) to a portion of the handle unit where they are then attached to contact points (24, 25) provided for the purpose.

The contacts (24, 25) on the handle unit (i.e. those from the receiver (5)) can be exposed in a variety of manners, as long as they are ultimately enabled to make connection with corresponding contacts (26, 27) of the secondary unit (9). Associated with the secondary (e.g. electronic drive) unit (9) is a set of corresponding contact points (26, 27) which are electrically connected to the circuitry that drives the motor [not shown] which retracts the locking bar (8) away from the locking protrusion (7) of the key barrel (6) when the receiver (5) is activated e.g. by a tag.

When the handle unit (1) and secondary (e.g. electronic drive) unit (9) are positioned correctly in an operably associated manner, with the handle unit (1) on the outer part of the panel (3) and the secondary unit (9) on the inner part of the panel, the electric contacts (24, 25) derived from the receiver (5) make electrical connection with the contacts (27, 26) connected to the secondary unit (9), thereby completing the circuit. In this configuration, when the receiver (5) is activated by a tag the signal is received (due to the location of the receiver away from metallic sources), travels via the cables (22, 23), through the contact points (24, 25) on the handle unit (1) and the contact points (27, 26) of the secondary (drive) unit (9), and activates the motor in the secondary (drive) unit. The motor, which is connected to a power source [not shown] (e.g. battery or mains), thereafter retracts the locking bar (8) and the handle is able to be lifted away from the lock mechanism and rotated to open the panel.

In one embodiment of the present invention, the contacts (24, 25) may run along the outside of at least one fixing post (10) (e.g. a screw post) of the handle unit (1). When the handle unit (1) and secondary unit (9) are operably associated with each other, the fixing post (10) of the handle unit (1) associates with a complementary receiving portion (11) on the secondary unit in order that the two units can be securely fixed together.

In this embodiment, the receiving portion (11) of the secondary unit also then has contact regions (27, 26) which interact with the contacts (24, 25) on the fixing post (10) of the handle unit (1), such that the circuit between the receiver (5) and secondary unit (9) is completed.

In certain embodiments, the one or more of the contacts (24, 25) of the handle unit (1) and/or one or more of the contacts (27, 26) in the receiving portion (11) of the secondary unit (9) are biased outwardly towards the contacts on the receiving portion (27, 26) or fixing post (24, 25) of the handle unit, respectively. Such biasing means can be via springs and the like, or via the natural tendency of the metal of the contacts to conform to a configuration whereby the contacts on one of the units stand towards the contacts of the complementary unit.

In an alternative embodiment [not shown], the contacts of the receiver on the handle unit are situated within the one or more fixing posts, and contact with the secondary unit is achieved by a metallic item being inserted into the one or more fixing posts in order to complete the circuit.

In this regard, the item being inserted into a fixing post can be the contact of the secondary unit, which may therefore be upstanding from the secondary unit in order to be able to be inserted correctly into the fixing post. Such an embodiment may be useful if the handle unit and secondary unit are operably associated with each other via a clip.

Alternatively, the metallic item being used to complete the circuit between the receiver and the secondary unit may be a fixing screw (40, 41), where the at least one fixing post (10) is a screw post. In this regard, the receiver contacts (24, 25) will be positioned in the fixing post such that contact with a screw (40, 41) is made when a screw is used to connect the handle unit and secondary unit together. The contacts may lie at the bottom of the fixing post, or else they may extend at least partially up the fixing post to ensure a certain contact with the screw is made. Part of the screw hole itself may be metallic and the contacts are connected to this metallic portion. On the secondary unit side, the contacts there will also be positioned such that contact is made with the screw when it passes through the secondary unit on its way to threading into the screw post of the handle unit. The contacts may form part of a thread around the screw hole in the secondary unit, or else may be connectable with the screw in other ways which will be evident to the skilled person (e.g. by a metallic seat in the screw hole where the screw head fits when screwed into position).

Thus, when a screw (40, 41) used for fixing the secondary unit (9) and handle unit (1) together is passed through the respective holes (42, 43) and tightened on the thread (44, 45) of the screw post, it will make contact with the contacts (24, 25) on the handle unit derived from the receiver (5), and also those contacts (27, 26) derived from the secondary unit (9). The circuit is thereby completed and the RFID system is operational.

It should be noted that reference herein to one unit having fixing posts (or the like) and the other unit having a receiving portion are meant to be used interchangeably, as long as correct (operable) connection between the two units is achieved. Therefore, mention of the handle unit having a fixing post and the secondary unit having a receiving portion can be interpreted as the secondary unit having a fixing post and the handle unit having a receiving portion.

Turning to the secondary unit (9) of the present invention, where the secondary unit is an electronic drive unit comprising a motor and a locking bar (8), another advantage of the present invention is that the secondary unit is designed such that it can easily fit into the place of existing secondary units (which may or may not be motorised, but which typically will be non-motorised). In this regard, the secondary unit (9) of the present invention contains its circuit board(s) running widthways and lengthways along the profile of the secondary unit, rather than being upstanding along the depth of the unit. In this manner, a much flatter profile of the secondary unit can be achieved, which means that the secondary unit has less chance of disrupting or interfering with the equipment held behind the panel on which the locking mechanism is placed. Typically, the secondary unit will be between 20 and 30 mm in depth, typically between 23 and 28 mm.

Moreover, in addition or alternatively, the secondary unit (9) of the present invention has at least one fixing flange (46) positioned at the opposite end of the secondary unit (9) to where the contacts (26, 27) are located. This flange (46) is designed to be fixed to a complementary part (47) of the handle unit, such that the retrofitting of the locking assembly is easily and securely completed. With the flange (46) of the secondary unit (9) locating with a corresponding fixing part (47) on the handle unit (1), no drilling of further fixing holes either through the secondary unit (9), handle unit (1), or panel (3), is required. Furthermore, the flange (46) allows the secondary unit (9) to be more compact along its length, so that it is not as long as the handle unit, once again reducing possible interference with existing equipment that is behind the panel. The compact nature of the secondary unit also allows space for a separate spacer unit or gearing mechanism [not shown] to be associated with the shaft (21) of the handle (2) through a pre-existing hole (30) of the panel (3).

Turning to the handle unit of the present invention, the handle (2) may have a profile (50) (such as a lattice) on the rear face (i.e. the face that faces into the handle unit, away from the user). On the handle frame (4) facing towards the rear face of the handle (2), there may be one or more barriers which are complementary to the profile (50) on the rear of the handle. These one or more barriers are designed to fit inside the profile of the handle to prevent the handle from being moved in a lateral direction when it is nestled within the handle frame (i.e. when the handle is in a closed position). This adds an additional level of security, as it makes it harder for the handle to be forced in a lateral direction in an attempt to get the locking protrusion on the locking barrel to clear the locking bar of the secondary unit.

The barriers may comprise projections on the handle unit that fit into corresponding holes e.g. of the lattice (50) in the handle (2), and/or they may comprise holes (e.g. a lattice) in the frame of the handle unit which accept corresponding projections on the handle.

## Claims

1. A two part RFID locking system, the first part comprising a handle unit (1) comprising an RFID receiver (5) positioned at a receiving location, the second part comprising a secondary unit (9) positioned at a locking location, the secondary unit (9) being separable from the handle unit (1) and wherein in use said units are operably associated with one another, the receiver (5) being operably connectable to the secondary unit (9) via one or more cables (22, 23), wherein a circuit between the receiver (5) and secondary unit (9) is not complete when the handle unit (1) and secondary unit (9) are not operably associated with one another, completion of the circuit between the receiver (5) and the secondary unit (9) occurring at one or more contact points (24, 25; 27, 26) when the handle unit (1) and secondary unit (9) are operably associated.

2. The locking system of claim 1, wherein the handle unit (1) has at least one fixing post (10) which is received in a complementary receiving portion (11) of the secondary unit (9).

3. The locking system of claim 2, wherein one or more contacts (24, 25) originating from the receiver (5) run along at least a portion of one or more outer faces of the at least one fixing post (10) of the handle unit (1).

4. The locking system of claims 2 or 3, wherein one or more contacts (27, 26) originating from the secondary unit (9) are located within a receiving portion (11) of the secondary unit.

5. The locking system of claim 4, wherein the one or more contacts (26, 27) in the receiving portion (11) of the secondary unit (9) are biased towards said one or more contacts (25, 24) originating from the receiver (5), and/or wherein one or more contacts originating from the receiver are biased towards said one or more contacts in the receiving portion of the secondary unit.

6. The locking system of claim 2, wherein one or more contacts (24, 25) originating from the receiver (5) are located within a fixing post, wherein a metallic fixing item is able to contact said contacts when inserted into said fixing post.

7. The locking system of claim 6, wherein one or more contacts (27, 26) originating from the secondary unit (9) are associated with at least one fixing hole (42, 43) such that the metallic fixing item is able to contact said contacts when inserted through said fixing hole.

8. The locking system of any of the preceding claims, wherein the handle unit (1) further comprises a handle (2) having associated with it a locking barrel (6), and wherein the secondary unit (9) further comprises a locking bar (8), said locking barrel (6) comprising a protrusion (7) which interacts with said locking bar (8) of the secondary unit (9) to provide locking of the handle (2).

9. The locking system of claim 8, wherein the secondary unit (9) is an electronic drive unit comprising a motor operably linked to said locking bar (8), wherein activation of the receiver (5) by a RFID tag activates said motor in order to withdraw said locking bar (8) to provide clearance for said protrusion (7) on said locking barrel (6).

10. The locking system of claims 8 or 9, wherein the locking barrel (6) is key operated, optionally wherein the locking barrel is made from metal.

11. The locking system of any of the preceding claims, wherein the secondary unit (9) comprises circuitry and a motor, wherein said circuitry is positioned along the length and width of the secondary unit.

12. The locking system of any of the preceding claims, wherein the secondary unit (9) has a fixing flange (46) in order to secure the secondary unit (9) to the handle unit (1), preferably where the fixing flange (46) is located at the end of the secondary unit opposite the end where the contacts are located, optionally wherein the secondary unit (9) and fixing flange (46) are dimensioned so as not to extend substantially the whole length of the handle unit (1).

13. The locking system of any of the preceding claims, wherein the handle unit (1) comprises one or more barriers in the face of the handle frame facing towards the rear of the handle (2), wherein said barriers are complementary to a corresponding profile (50) in the rear face of said handle (2) such that said barriers prevent the handle from being moved laterally when in a closed position, optionally wherein one or more barriers of the handle unit comprises a projection, and wherein the profile of the rear face of the handle (2) comprises a hole (50) to receive said projection, and/or optionally wherein one or more barriers of the handle unit (1) comprises a hole, and wherein the profile of the rear face of the handle (2) comprises a projection to fit in said hole.

14. The locking system of any of the preceding claims, wherein the locking system is part of a server rack handle.

15. A method of operably associating an RFID receiver (5) with a secondary unit (9), said RFID receiver (5) being positioned on or within a handle unit (1) and being connected to one or more contact points (24, 25) which are exposed on said handle unit (1), said secondary unit having corresponding contact points (27, 26), said method comprising aligning the handle unit with the secondary unit and fixing said units together, such that said contact points on said handle unit and secondary unit make electrical connection with the respective corresponding contact point.
